# FASCICULE DE BREVET EUROPEEN

(11) **EP 1 919 299 B1**
(45) Date de publication et mention de la délivrance du brevet: **01.03.2017**
(21) Numéro de dépôt: 06794349.8
(22) Date de dépôt: 24.08.2006
(51) Int. Cl.: A23K 20/20, A23K 40/10, A23K 50/20, A23K 10/16, A23K 20/174, A23K 20/147, A23K 20/142, A23K 20/163, A23K 20/10, A23K 20/189, A23K 20/195

(54) **PRODUIT POUR LA PREPARATION D'ALIMENTS SUPPLEMENTES POUR ANIMAUX**
VERFAHREN ZUR HERSTELLUNG EINES ANGEREICHERTEN TIERFUTTERS
PRODUCT FOR THE PREPARATION OF ENRICHED ANIMAL FEED

(30) Priorité: 25.08.2005 FR 0508742
(43) Date de publication de la demande: 14.05.2008
(73) Titulaire: VIRBAC S.A., 06516 Carros Cedex (FR)
(72) Inventeur: DERRIEU, Guy, F-06800 Cagnes sur Mer (FR); RAYNIER, Bernard, F-06200 NICE (FR)
(74) Mandataire: Macquet, Christophe
(86) Numéro de dépôt international: PCT/FR2006/001975
(87) Numéro de publication internationale: WO 2007/023223

(56) Documents cités:
- EP-A- 0 371 878
- EP-A- 1 405 665
- EP-A1- 0 658 313
- WO-A2-00/18254
- FR-A- 2 702 968
- JP-A- 60 012 939
- US-A- 3 784 716
- US-A- 5 363 754
- US-A- 5 948 431
- US-A1- 2002 028 283
- DATABASE WPI [Online] THOMSON SCIENTIFIC, LONDON, GB; 23 January 1985 (1985-01-23), SUCHI M; SUZUKI T: "Adhesive medicine compsn. for marine fed. - comprising dextrin-alpha starch dry adhesive opt. water-soluble gum, and medicament", XP002728085,accession no. 1985-058055 Database accession no. 1985-058055

## Description

La présente invention est relative à un produit pour la préparation d'aliments supplémentés pour animaux et, plus particulièrement, pour animaux de rente et pour équidés. L'invention concerne également un nouveau procédé de préparation d'aliments supplémentés pour animaux.

Outre les aliments dits grossiers, qui regroupent l'ensemble des produits fourragers tels que l'herbe pâturée, le foin, les légumineuses, et qui apportent des fibres végétales, l'alimentation des animaux de rente et des équidés est également constituée d'aliments supplémentés qui se caractérisent par la présence d'une certaine quantité d'un ou plusieurs principes actifs destinés à apporter de l'énergie, des protéines ou des minéraux mais également des apports médicamenteux. Ces aliments supplémentés peuvent être présentés différemment, selon les modes d'utilisation et les espèces auxquels ils sont destinés. En règle générale, l'alimentation des animaux de rente et, notamment, des bovins, des caprins, des ovins, des porcs, et des volailles mais également des équidés, comprend des granulés ou des miettes de tels granulés, des farines, des semoules ou des mash qui sont supplémentés en principes actifs généralement médicamenteux.

Il est bien connu des spécialistes des industries pharmaceutiques ou vétérinaires que la mise en oeuvre de principes actifs pulvérulents et leur incorporation à des aliments supplémentés ou médicamenteux présentent de nombreux inconvénients.

Les problèmes associés à de telles transformations sont généralement les suivants : contamination croisée lorsque le même atelier et appareillage transforme des aliments en aliments supplémentés en mettant en oeuvre divers principes actifs, et on voit l'aliment supplémenté souillé par les résidus de la réalisation antérieure ; déficit d'homogénéité au niveau des aliments, particulièrement lorsque la charge en principe actif est très limitée ; dégradation liée à la sensibilité, de divers principes actifs, à la température, à l'humidité et à la pression.

Ces procédés demandent donc généralement de traiter les principes actifs au préalable, notamment par des procédés d'enrobage qui sont bien connus de l'homme du métier.

Les brevets EP 0 165 577 et EP 0 302 462 décrivent la préparation d'un additif alimentaire pour animaux contenant de la bacitracine de zinc qui, après mélange avec l'aliment pour animaux ou lors du pressage en agglomérés, possède une stabilité améliorée et permet un stockage prolongé. Cet additif alimentaire pour animaux de compagnie contenant de la bacitracine de zinc à hauteur de 5 à 40% en poids est enrobé d'un polymère. La fonction de ce polymère est de protéger le principe actif des conditions environnantes et des traitements mécaniques qu'il peut subir, tout en ayant la capacité de se dissoudre dans les conditions physiologiques (dans l'estomac, les intestins, les panses des espèces animales concernées) ou de gonfler suffisamment pour que le principe actif puisse être libéré.

Le brevet FR 2 748 393 décrit un procédé de traitement de principes actifs pulvérulents consistant à augmenter la granulométrie des principes actifs en les enrobant avec une solution aqueuse renfermant un sucre ou un mélange de sucres. Ce traitement permet de résoudre les inconvénients liés au dégagement de poussières pulvérulentes lors de la préparation des aliments pour animaux.

Le brevet FR 2 548 675 décrit une nouvelle composition filmogène qui a pour but d'enrober des formes sèches pharmaceutiques pour les protéger contre la dégradation des principes actifs à la lumière ou à l'oxydation, contre l'abrasion lors du conditionnement en blisters, contre la formation de poussière.

Le brevet EP 0 600 775 décrit des principes actifs pulvérulents stabilisés enrobés par une composition d'enrobage contenant entre 2 et 25% en poids d'un agent filmogène et entre 0 et 5% en poids d'un agent porogène. Cette composition d'enrobage a pour but de stabiliser les principes actifs pulvérulents pour éviter toute altération de ceux-ci pendant les opérations de formulation et de garantir leur intégrité tout au long de la durée de vie des produits manufacturés obtenus, sans en modifier leur activité et leurs propriétés physiques.

La demande de brevet FR 2 702 968 décrit un procédé pour la préparation de particules, plus particulièrement des microparticules, qui contiennent un excipient formant une matrice et un ingrédient actif, réparti dans la matrice, utile en thérapeutique, cosmétique, diététique ou alimentation.

La demande de brevet EP 1 405 665 décrit des particules composées d'un matériau de base et d'une substance intégrée dans le matériau de base. Cette substance est notamment physiologiquement active et il est divulgué, par exemple, que cette substance peut être un antibiotique, une hormone, un vaccin, des minéraux ou encore des vitamines.

La demande de brevet EP 0 371 878 décrit des compositions pour l'enrobage d'additifs alimentaires destinés aux ruminants qui sont stables à un pH supérieur à 5 et qui libèrent une substance biologiquement active à un pH inférieur à 3,5 contenant comme substance sensible aux variations de pH un dérivé organosoluble du chitosan.

La demande internationale WO 00/18254 décrit une méthode d'encapsulation de composés sensibles à la chaleur et/ou à l'oxygène avec une couche protectrice afin de limiter la perte d'activité du composé pendant sa fabrication ou son stockage, permettant de maintenir un haut degré de biodisponibilité du composé.

La demande EP 0 658 313 décrit une méthode de fabrication de prémélanges, adaptée pour une répartition homogène dans les aliments, qui consiste à enrober des granulés avec une couche constituée de composés hydrosolubles et d'un composé actif. Ces prémélanges sont destinés à être utilisés pour l'élevage d'animaux ou encore à usage vétérinaire.

La demande JP 60 012939 décrit une composition médicamenteuse composée d'un principe actif et d'excipients, qui peut être saupoudrée sur un aliment solide dont la surface est humide, avant le nourrissage. Il se forme un gel grâce aux excipients (amidon et dextrine) qui adhère à la nourriture.

Considérant ce qui précède, un problème que se propose de résoudre l'invention est de réaliser un produit pour la préparation d'aliments supplémentés pour animaux, ainsi qu'un procédé de préparation de tels aliments, qui ne présente pas les inconvénients exposés précédemment.

La solution proposée par l'invention à ce problème posé a pour premier objet un prémélange pour la préparation d'aliments supplémentés pour animaux ledit mélange comportant, d'une part, une base végétale et/ou minérale et, d'autre part, des grains, lesdits grains comprenant au moins un principe actif et une composition comprenant un excipient ou un mélange d'excipients présentant des propriétés adhésives en présence d'une phase acqueuse, caractérisé en ce que les grains sont des grains d'un diamètre moyen compris entre 50 et 700µm obtenus par granulation, qui comprennent entre 70 et 90 % en poids de principe actif et entre 10 et 30% en poids de composition.

L'invention a également pour objet les grains de diamètre moyen compris entre 50 et 700 µm, obtenus par granulation, pour la préparation d'aliments supplémentés pour animaux, lesdits grains comprenant au moins un principe actif et une composition comprenant un excipient ou un mélange d'excipients présentant des propriétés adhésives en présence d'une phase aqueuse caractérisés en ce que lesdits grains comprennent entre 70 et 90 % en poids de principe actif et entre 10 et 30 % en poids d'excipient ou de mélange d'excipients présentant des propriétés adhésives en présence d'une phase aqueuse et satisfaisant au test d'adhésivité suivant selon lequel :
- on prépare 40 mg de grains, d'un diamètre compris entre 200 et 500 µm, consistant en 70 à 90% en poids d'un agent de charge tel que la cellulose cristalline de type Avicel® PH101 et 10 à 30% en poids d'une composition contenant uniquement l'excipient ou le mélange d'excipients ;
- on étale les grains sur toute la surface d'une plaque de verre d'environ 200 cm² ;
- on pulvérise environ 2 ml d'eau sur cette plaque de verre ;
- 2 minutes après la pulvérisation d'eau, on place la plaque de verre à la verticale à 25°C pendant 1 heure et on récupère les grains qui ne sont pas restés collés sur la plaque de verre ;
- on récupère moins de 40% du poids initial des grains.

Selon un mode réalisation préféré, les grains consistent en un ou plusieurs principes actifs et un excipient ou un mélange d'excipients présentant des propriétés adhésives en présence d'une phase aqueuse, à l'exception d'autres types de composants.

Les grains selon l'invention ont un diamètre moyen compris entre 50 et 700 µm, plus préférentiellement entre 50 et 500 µm, et encore plus préférentiellement entre 50 et 200 µm.

Le procédé de granulation du ou des principes actifs du produit selon l'invention avec la composition est avantageusement mis en oeuvre au moyen d'un granulateur. Pour ce faire, le principe actif, sous la forme de particules pulvérulentes, est tout d'abord mélangé avec la composition dans le granulateur puis on effectue une pulvérisation d'un solvant organique non aqueux, notamment un alcool, de préférence l'isopropanol, cet alcool pouvant être dilué avec 10 à 40% en poids d'eau. Après séchage des granulés ainsi obtenus, les agglomérés, ou encore grains, résultants sont calibrés.

Un autre procédé de préparation de grains est par exemple un procédé de granulation au moyen d'un granulateur à lit d'air fluidisé dans lequel le principe actif, sous la forme de particules pulvérulentes, et la composition sont mis en suspension dans un courant d'air et un solvant organique non aqueux tel que décrit précédemment, dilué ou non avec 10 à 40% en poids d'eau, est pulvérisé au moyen d'une buse.

L'invention inclut également, comme technique de granulation, toute autre technique, connue de l'homme du métier, permettant d'obtenir le même résultat.

On entend, au sens de la présente invention, par principe actif, toutes substances, présentant des activités thérapeutiques ou non, utiles en tant que supplément à l'alimentation animale. Il s'agit préférentiellement de principes actifs tels que des vitamines, des minéraux, des oligoéléments, des acides aminés, des protéines, des enzymes, des micro-organismes revivifiables, des facteurs de croissance, des anti-bactériens, des antifongiques, des antiseptiques, des antibiotiques, des antibiomimétiques, des antiparasitaires, des inhibiteurs de croissance des insectes ou des anti-infectieux de synthèse. Il s'agit plus préférentiellement de principes actifs médicamenteux choisis parmi les familles suivantes : les bétalactamines, telles que l'amoxicilline et l'ampicilline ; les aminosides, tels que l'apramycine, la néomycine, la spectinomycine et la gentamicine ; les tétracyclines, telles que la tétracycline, l'oxytétracycline, la chlortétracycline et la doxycycline ; les macrolides et apparentés, tels que la josamycine, la spiramycine, la tylosine, l'acétylisovaleryltylosine, la tiamuline, la valnémuline et la lincomycine ; les antibiotiques polypeptidiques, tels que la colistine ; les quinolones, telles que l'acide oxolinique, la fluméquine et les fluoroquinolones (enrofloxacine, difloxacine, danofloxacine) ; les phénicolés tels que le florfénicol ; les triazones telles que le toltrazuril, et le diclazuril ; les aminopyrimidines telles que l'amprolium ; les sulfonamides, tels que la sulfadiazine, la sulfadimidine, la sulfaquinoxaline et la sulfadimethoxine ; les diaminopyrimidines, telles que le trimethoprime ; les polyéthers ionophores, tels que le monensin, la narasin et la salinomycine ; les benzimidazoles, tels que l'albendazole, l'oxfenbendazole, le flubendazole et l'oxibendazole ; les imidazothiazoles tels que le lévamisole et ses sels ; les avermectines telles que l'ivermectine, la doramectine et l'éprinomectine ; les milbémycines telles que la moxidectine ; les hexahydropyrazines telles que le praziquantel ; les salicylanilides tels que le closantel ; les tetrahydropyrimidines telles que le pyrantel pamoate ; les benzenesulfonamides tels que le clorsulon ; et les anti-inflammatoires non stéroidiens tels que l'acide acétyl salicylique, le paracétamol, la flunixine et le kétoprofène.

La composition selon l'invention est constituée d'un ou plusieurs excipients présentant des propriétés adhésives en présence d'une phase aqueuse.

Selon un mode de réalisation avantageux de l'invention, l'excipient ou le mélange d'excipients satisfait au test d'adhésivité suivant selon lequel :
- on prépare 40 mg de grains, d'un diamètre compris entre 200 et 500 µm, consistant en 70 à 90% en poids d'un agent de charge tel que la cellulose cristalline de type Avicel^{®} PH101 et 10 à 30% en poids d'une composition contenant uniquement l'excipient ou le mélange d'excipients ;
- on étale les grains sur toute la surface d'une plaque de verre d'environ 200 cm² ;
- on pulvérise environ 2 ml d'eau sur cette plaque de verre ;
- 2 minutes après la pulvérisation d'eau, on place la plaque de verre à la verticale à 25°C pendant 1 heure et on récupère les grains qui ne sont pas restés collés sur la plaque de verre ;
- on récupère moins de 40% du poids initial des grains.

L'excipient ou le mélange d'excipients confère ainsi à ladite composition des propriétés adhésives en présence d'une phase aqueuse qui répondent avantageusement audit test d'adhésivité.

De manière préférée, dans le cadre dudit test d'adhésivité, les grains consistent en 80% à 90% en poids d'un agent de charge et 10% à 20% en poids d'une composition contenant uniquement l'excipient ou le mélange d'excipients. De manière particulièrement préférée, les grains consistent en 85% en poids d'un agent de charge tel que la cellulose cristalline de type Avicel^{®} PH101 et 15% en poids d'une composition contenant uniquement l'excipient ou le mélange d'excipients.

L'agent de charge est inerte par rapport à l'eau et il a pour fonction, dans le cadre du test d'adhésivité, de se substituer au principe actif.

Comme excipient utilisable pour constituer la composition selon l'invention, on peut citer :
- des polymères tels que l'acide alginique et ses sels, l'acide hyaluronique, les pectines, la gomme arabique, la gomme adragante, la gomme karaya, la gomme xanthane, les carraghénanes, les polymères pullulan ou agar, le chitosan ou ses dérivés, et le dextran ;
- les polymères de l'acide acrylique réticulés avec un éther allylique, tels que ceux connus sous le nom générique de carbomers, essentiellement constitués d'un ou d'un mélange de carbomers (fabriqués par B.F. Goodrich, USA sous la dénomination Carbopol^{™} et référencés par exemple Carbopol 974P NF, Carbopol 934P NF, Carbopol 971P NF),
- les polymères de l'acide acrylique réticulés avec des polyalkenyl éthers;
- les polymères de l'acide acrylique, réticulés avec le divinyl glycol, tels que ceux connus sous le nom générique Polycarbophil et commercialisés sous l'appellation Noveon^{™} ;
- les copolymères de vinylméthyl éther et d'anhydride maléique commercialisés sous l'appellation Gantrez^{™} ; les polymères thermoréversibles tels que les polyoxyalkylene triblocs constitués de blocs de polyoxyde d'éthylène et de blocs de polyoxyde de propylène commercialisés sous l'appellation Poloxamer^{™} ; et les polymères thermoréversibles hyperbranchés triblocs constitués de blocs de polyoxyde d'éthylène et de blocs de polyoxyde de propylène reliés ensemble par des ponts de type carbamate, urée, allophanate ou biuret ;
- un mélange d'au moins deux de ces excipients.

La composition selon l'invention peut également contenir différents additifs tels que des agents conservateurs, des arômes, des excipients de charge, choisis avantageusement parmi l'amidon, la cellulose microcristalline, le lactose, le sorbitol, le mannitol, un phosphate, des agents liants, choisis avantageusement parmi les polyvinylpyrrolidone, présentant de préférence une masse molaire comprise entre 2 500 et 30 000, soit parmi les grades PVPK12, PVPK17, PVPK25 et PVPK30.

Selon un mode de réalisation avantageux de l'invention, la composition contient des arômes ou des édulcorants appétents permettant de masquer le goût des principes actifs et, par suite, de favoriser leur absorption par les animaux.

Les grains selon l'invention comprennent entre 70 et 90 % d'un ou plusieurs principes actifs, et entre 10 et 30% d'une composition, ces pourcentages étant donnés en poids du poids total du grain.

Le prémélange selon l'invention comprend avantageusement une base végétale et/ou minérale de manière à former un prémélange. Ce prémélange, appelé également « prémix », est une formulation nécessaire lorsqu'on doit inclure à une formule alimentaire une très petite quantité d'un principe actif dans une substance inerte ou dans un aliment, pour obtenir un volume plus facile à mélanger ensuite à la totalité du régime.

La base végétale est avantageusement une farine utilisée pour l'alimentation animale. Cette farine est de préférence choisie parmi les aliments farine à base de céréales contenant du gluten. Les céréales qui contiennent du gluten sont essentiellement le blé, le maïs, l'orge, le seigle et l'avoine. La farine de blé est particulièrement préférée.

La base minérale est avantageusement un composant utilisé pour l'alimentation animale. Ce composant est de préférence choisi parmi le carbonate de calcium, le phosphate de magnésium.

La base peut elle-même contenir des additifs nutritionnels.

Selon un mode de réalisation avantageux de l'invention, le prémélange comprend 5 à 80% en poids de grains et 20 à 95 % de base végétale et/ou minérale. Un mode de réalisation particulièrement préféré est celui dans lequel le prémélange comprend 5%, 10% ou 50% en poids de principe actif. On doit ainsi ajuster la quantité de grain dans le prémélange en fonction de la composition du grain en principe actif ou en mélange de principes actifs. Par exemple, si le grain est lui-même constitué de 75% en poids d'un ou plusieurs principes actifs et de 25% d'une composition, alors pour obtenir un prémélange comprenant 10% en poids de principe actif celui-ci sera constitué de 13,34% de grains et de 86,66% de base végétale et/ou minérale.

La préparation des aliments supplémentés pour animaux est réalisée grâce à des procédés de préparation connus de l'homme du métier, qui peuvent être classés en trois catégories : procédé de pré-granulation, procédé de post-granulation et procédé de « top feeding ».

Le procédé de pré-granulation consiste à préparer des aliments supplémentés sous forme de granulés à partir d'un mélange constitué d'un prémélange et d'une composition alimentaire. Le prémélange résulte de l'incorporation des principes actifs à un support inerte d'origine végétale et/ou minérale. La composition alimentaire est généralement constituée d'une base farine et comprend parfois une faible proportion d'additifs nutritionnels. La composition ainsi préparée reçoit de la vapeur d'eau, elle est pressée et traitée thermiquement au sein d'un conditionneur. Elle est ensuite extrudée puis conditionnée en granulés avant refroidissement et séchage.

Le procédé de post-granulation consiste à préparer des aliments supplémentés sous forme de granulés en incorporant la composition contenant les principes actifs après la fabrication des granulés. Le procédé dit de « top feeding » consiste à préparer des aliments supplémentés en ajoutant directement la composition contenant les principes actifs sur la ration alimentaire présente dans la mangeoire, l'auge ou les trémies des animaux par simple saupoudrage.

Pendant longtemps, les aliments supplémentés sous forme de granulés étaient préparés par le procédé classique de pré-granulation mentionné ci-dessus. Cependant, ce procédé présente de nombreux inconvénients, qui ont été précédemment cités : la contamination croisée, la contamination du matériel de production, l'exposition du personnel aux poussières pouvant nuire gravement à leur santé, et la sensibilité des principes actifs au traitement thermique en milieu humide et sous pression.

Ce sont les raisons pour lesquelles les procédés de post-granulation qui visent à différer l'engagement du prémélange contenant les principes actifs ont été mis au point.

C'est le cas, en particulier, des procédés divulgués dans les documents EP 1 192 865, FR 2 338 653, EP 0 241 441, WO 93/14645, US 4,971,820, US 6,331,210, WO 96/22028, WO 01/39608, EP 0 707 798, US 6,395,091, US 6,056,822, US 5,650,184, US 5,786,008, US 6,656,525 et US 6,083,541.

Dans la plupart de ces procédés, une solution ou une suspension de principes actifs est pulvérisée sur des granulés alimentaires, ou alors, de tels granulés alimentaires sont mélangés avec une telle solution ou suspension en vue de former des granulés supplémentés.

Cependant, ces procédés présentent les inconvénients énumérés ci-après.

Tout d'abord, ils utilisent des quantités importantes de liquide ou de fluide visqueux et nécessitent des températures de traitement élevées pour mettre en suspension les principes actifs, ainsi qu'une étape de séchage conséquente. Une étape de refroidissement est également souvent nécessaire. Ensuite, on constate que l'étape de mélange des principes actifs est généralement réalisée sous une pression élevée. Tous ces paramètres opératoires peuvent avoir des incidences sur la stabilité des principes actifs, surtout les plus fragiles.

Ensuite, il s'avère que les appareillages utilisés pour la mise en oeuvre de ces procédés doivent être nettoyés fréquemment. Ce nettoyage est particulièrement difficile lorsque le liquide ou le fluide utilisé pour la pulvérisation ou le mélange est particulièrement visqueux et plus encore quand c'est un solide à température ambiante.

Il apparaît en outre que la distribution des principes actifs à la surface ou dans les granulés n'est pas suffisamment homogène.

Enfin, ces procédés sont complexes à mettre en oeuvre et s'avèrent coûteux.

La présente invention a donc aussi pour objet un procédé de préparation d'aliments supplémentés pour l'alimentation des animaux, en particulier des animaux de rente et des équidés, qui ne présente pas ces inconvénients.

Ce procédé comprend des étapes de :
- préparation, par granulation, de grains de diamètre moyen compris entre 50 et 700 µm comprenant entre 70 et 90% en poids d'un principe actif et entre 10 et 30% en poids d'une composition comprenant un excipient ou un mélange d'excipients présentant des propriétés adhésives en présence d'une phase aqueuse ;
- de mélange des grains avec une base végétale et/ou minérale en vue de l'obtention d'un prémélange ;
- mélange dudit prémélange avec un support alimentaire en vue de l'obtention de l'aliment supplémenté ; et de
- pulvérisation de la phase aqueuse sur ledit support alimentaire avant mélange et/ou sur l'ensemble prémélange/support alimentaire en cours de mélange, de manière à obtenir un aliment supplémenté présentant un taux d'humidité inférieur à 20%.

Selon un mode de réalisation particulier, les grains peuvent être directement mélangés avec un support alimentaire en vue de l'obtention de l'aliment supplémenté, sans étape d'obtention d'un prémélange.

Le support alimentaire selon l'invention se présente généralement sous forme de granulés, de farines, de semoules ou de mash.

Selon un mode de réalisation avantageux de l'invention, le support alimentaire sera constitué de granulés. Ces granulés qui sont destinés à l'alimentation animale sont fabriqués à partir de composants sous forme de farines auxquels sont éventuellement ajoutés des additifs nutritionnels. Ils se présentent généralement sous une forme sensiblement cylindrique de 2 à 10 mm de diamètre et de préférence entre 3 et 6 mm de diamètre.

En pratique, on mélange le prémélange au support alimentaire préférentiellement à hauteur de 0,01 à 5% en poids et encore plus préférentiellement de 0,2 à 2,5% en poids. Le procédé selon l'invention comprend par ailleurs au moins une étape de pulvérisation d'une phase aqueuse sur le support alimentaire avant mélange, et/ou sur l'ensemble prémélange/support alimentaire, au cours dudit mélange.

Le poids de la phase aqueuse à pulvériser représente avantageusement 4 à 9% du poids de l'ensemble prémélange/support alimentaire.

Cette phase aqueuse peut contenir des principes actifs ou des adjuvants tels que des conservateurs. Les agents conservateurs comprennent l'alcool benzylique, l'alcool phényléthylique, l'acide benzoïque ou ses sels, de préférence le sel de sodium, l'acide parahydroxybenzoïque, les esters de l'acide parahydroxybenzoïque de préférence les esters méthylique, éthylique, propylique ou butylique, ou leurs sels, de préférence les sels de sodium, utilisés seuls ou en association, l'acide sorbique ou ses sels, de préférence, le sel de potassium.

Il est possible d'effectuer plusieurs pulvérisations, par exemple une première pulvérisation partielle sur le support alimentaire avant mélange, et une seconde pulvérisation partielle pendant le mélange prémélange selon l'invention avec le support alimentaire.

Lorsqu'une pulvérisation est mise en oeuvre au cours de l'étape de mélange du prémélange selon l'invention avec le support alimentaire, elle est avantageusement mise en oeuvre sur l'ensemble prémélange/support alimentaire en cours de mélange.

En pratique, le prémélange selon l'invention et le support alimentaire sont introduits dans un mélangeur et mélangés pendant une période de temps relativement restreinte mais suffisamment longue pour que le mélange soit relativement homogène. Puis, la phase aqueuse est pulvérisée en cours de mélange. Le mélange se poursuit toutefois après pulvérisation de manière à ce que la phase aqueuse pulvérisée soit correctement répartie dans le mélange. Dans un exemple, le temps de mélange avant pulvérisation est de l'ordre de 1 min ou moins, la pulvérisation elle-même dure moins de 2 min et le mélange se poursuit environ 1 min après pulvérisation. Le procédé de préparation selon l'invention apparaît donc significativement plus rapide que les procédés de l'art antérieur. Il peut être mis en oeuvre par un personnel non qualifié techniquement, par exemple le personnel ayant la charge de la distribution de l'aliment aux animaux de rente.

Les étapes précitées de mélange et de pulvérisation sont mises en oeuvre par un mélangeur, de préférence un mélangeur issu de la technologie bi-rotor, comprenant au moins une buse de pulvérisation.

La quantité de phase aqueuse pulvérisée selon le procédé de préparation selon l'invention est significativement réduite par rapport aux quantités de liquide ou de fluide visqueux mises en oeuvre dans les procédés de l'art antérieur. En fait, dans l'invention, la phase aqueuse n'a pas pour fonction de solubiliser ou d'assurer une mise en suspension de principes actifs. Elle a pour fonction d'activer les propriétés adhésives de la composition, de manière à assurer efficacement l'adhésion des grains selon l'invention, et donc des principes actifs, au support alimentaire.

Compte tenu des faibles quantités de phase aqueuse mises en oeuvre dans le procédé selon l'invention, les aliments supplémentés présentent un taux d'humidité inférieur à 20%. Aussi, le procédé selon l'invention ne nécessite pas d'étape de séchage poussée. Bien entendu, les aliments supplémentés peuvent éventuellement faire l'objet d'un séchage, par exemple, lors d'un convoyage sur un tapis vers un silo de stockage. Toutefois, ce séchage est avantageusement effectué de manière passive ou bien par aspiration, lors de ce convoyage. Après un tel convoyage, par exemple d'une durée inférieure à 5 min, le taux d'humidité des aliments supplémentés selon le procédé de l'invention est inférieur à 14%.

On notera que l'ensemble des étapes du procédé selon l'invention et, en particulier, l'étape de mélange, sont mises en oeuvre à température ambiante et à la pression atmosphérique. Il n'est donc nul besoin de régler ou d'ajuster la température du mélange ou la pression. En outre, aucune étape de refroidissement n'est nécessaire.

Il apparaît que le procédé selon l'invention assure une distribution homogène des principes actifs à la surface des aliments supplémentés. Cet avantage résulte notamment de l'utilisation d'un prémélange et, en particulier, de la distribution homogène préalable du ou des principes actifs, dans les grains, dans ce prémélange.

L'utilisation d'une phase aqueuse facilite le nettoyage des appareillages et limite les contaminations croisées. De plus, l'usage d'une telle phase aqueuse ne modifie pas les propriétés des grains et des principes actifs contenus dans le produit selon l'invention.

L'invention a également pour objet un aliment supplémenté pour animaux, comprenant un support alimentaire supplémenté par des grains selon l'invention ou, de préférence, avec un prémélange selon l'invention, les grains et le prémélange étant tels que définis précédemment.

L'invention a également pour objet un aliment supplémenté pour animaux obtenu par le procédé selon l'invention tel que défini précédemment.

Outre son utilisation dans le procédé de préparation d'aliments supplémentés selon l'invention, les grains ou le prémélange selon l'invention peuvent également être utilisés dans tous les procédés de préparation connus de l'homme du métier cités précédemment, car ils présentent l'avantage de réduire la production de poussières et de limiter au maximum les inconvénients qui en résultent, tout en conservant une bonne stabilité du principe actif ainsi qu'une bonne biodisponibilité.

La présente invention a donc pour objet l'utilisation des grains ou du prémélangep selon l'invention pour la préparation d'aliments supplémentés pour animaux sous forme de granulés consistant à introduire lesdits grains ou ledit prémélange dans le mélangeur avant granulation.

L'introduction des grains ou du prémélange dans le mélangeur par une alimentation automatique en ligne peut être faite en ayant pris soin d'utiliser le pouvoir adhésif du grain en vaporisant, sous agitation, une petite quantité de phase aqueuse ce qui permet par exemple aux grains d'adhérer à la base végétale et/ou minérale composante du prémélange, le cas échéant, évitant ainsi la contamination des verses sacs, des élévateurs, des convoyeurs, éléments classiques des unités de production d'aliments.

L'introduction du prémélange peut également se faire directement dans le mélangeur. Les performances de l'agitation et le taux d'humidité, qui peut être voisin de 16%, vont assurer l'homogénéité et l'immobilisation des grains sur l'aliment.

Quel que soit le type d'utilisation, l'étape de mélange ne conduira pas à la contamination du matériel, de l'environnement, et du personnel.

Il apparaît en outre qu'il n'y a pas de démélange lors du transfert du mélangeur vers la presse à granuler si le souhait est d'obtenir ce format d'aliment, ou lors du remplissage des sacs ou de bennes pour une livraison en vrac pour les farines supplémentées.

La présente invention a également pour objet l'utilisation des grains ou du prémélange selon l'invention pour la préparation d'aliments supplémentés pour animaux par saupoudrage du produit directement sur la ration alimentaire.

Il apparaît qu'avec la présence d'humidité de l'aliment ou par une simple vaporisation d'une phase aqueuse, le grain va se lier à l'aliment et ainsi il ne tombe pas dans le fond de la mangeoire, ou il ne sera pas chassé si l'animal souffle dessus. On évite ainsi la contamination de l'environnement, de l'éleveur, et on garantit aussi le respect de la posologie.

Des études ont été réalisées afin de mettre en évidence les avantages des grains ou du prémélange et du procédé selon l'invention. Les résultats de ces études sont reportés dans les exemples ci-après.

### EXEMPLE 1 : Stabilité des grains

1.a) Deux grains, composés de doxycycline sous forme hyclate et de Carbopol 974P NF, référencés Gr-1 et Gr-2, ont été suivis en stabilité. Ces deux constituants représentent respectivement 85% et 15% en poids des grains étudiés, grains obtenus par granulation en présence d'alcool isopropylique. La granulométrie médiane des deux grains est respectivement de 250 microns pour le premier, de 125 microns pour le second.
La quantité de doxycycline a été mesurée pour ces grains dès leur formation, à to, puis au cours de leur conservation à 40°C/75%RH, à 2 mois (t2m/40°C), 4 mois et 6 mois (t4m/40°C et t6m/40°C). Les résultats de ces mesures sont reportés dans le tableau 1.a ci-dessous, où la quantité de doxycycline base est exprimée en pourcentage par rapport au poids de grain étudié. Les rapports t2m/to, t4m/to et t6m/to expriment la proportion de doxycycline présente sous forme hyclate à 2, 4, et 6 mois, par rapport à la doxycycline présente dans les grains à to.

**Tableau 1.a**

| Grains | to (CV%) | t2m/40°C (CV%) | t2m/to | t4m/40°C (CV%) | t4m/to | t6m/40°C (CV%) | t6m/to |
|---|---|---|---|---|---|---|---|
| Gr-1 | 67,2% (0,2) | 69,1% (0,7) | 102,8% | 70,2% (1,0) | 104,5% | 69,9% (0,5) | 104,0% |
| Gr-2 | 66,9% (0,4) | 68,9% (0,3) | 103,0% | 69,4% (1,3) | 103,7% | 68,9% (0,3) | 103,0% |

Ces mesures montrent que le procédé de fabrication des grains par granulation en présence d'alcool isopropylique permet une intégration homogène de la doxycycline hyclate dans les grains, quelle que soit la granulométrie médiane du grain. Ces mesures montrent encore que l'intégrité chimique du principe actif est parfaitement préservée au cours du temps en stabilité accélérée.
1.b) Un grain, composé d'amoxicilline sous forme trihydrate et de Carbopol 974P NF, référencé Gr-3, a été suivi en stabilité. Ces deux constituants représentent respectivement 85% et 15% en poids des grains étudiés, grains obtenus par granulation en présence d'alcool isopropylique. La granulométrie médiane de ce grain est de 180 microns.

La quantité d'amoxicilline a été mesurée pour ce grain dès sa formation, à to, puis au cours de sa conservation à 30°C/60%RH, température retenue pour l'étude compte tenu de l'instabilité naturelle de l'amoxicilline trihydrate à la chaleur, à 2 mois (t2m/30°C), 4 mois et 6 mois (t4m/30°C et t6m/30°C). Les résultats de ces mesures sont reportés dans le tableau 1.b ci-dessous, où la quantité d'amoxiciline base est exprimée en pourcentage par rapport au poids de grain étudié. Les rapports t2m/to, t4m/to et t6m/to expriment la proportion de d'amoxiciline présente sous forme trihydrate à 2, 4, et 6 mois, par rapport à l'amoxicilline présente dans le grain à to.

**Tableau 1.b**

| Grain | to (CV%) | t2m/30°C (CV%) | t2m/to | t4m/30°C (CV%) | t4m/to | t6m/30°C (CV%) | t6m/to |
|---|---|---|---|---|---|---|---|
| Gr-3 | 69,1% (0,6) | 69,5% (0,8) | 100,6% | 68,2% (1,2) | 98,7% | 67,6% (0,6) | 97,8% |

Ces mesures montrent que le procédé de fabrication d'un grain par granulation en présence d'alcool isopropylique permet une intégration homogène de l'amoxicilline trihydrate dans les grains, avec une faible granulométrie médiane du grain. Ces mesures montrent encore que l'intégrité chimique du principe actif est parfaitement préservée au cours du temps en stabilité accélérée.

### EXEMPLE 2 : Stabilité des prémélanges

2.a) Deux prémélanges, référencés Pr-1 et Pr-2, obtenus respectivement par mélange des grains Gr-1 et Gr-2, décrits dans l'exemple 1.a, avec de la farine de blé, ont été suivis en stabilité. La quantité de doxycycline engagée sous forme hyclate a été mesurée pour ces prémélanges dès leur formation, à to, puis au cours de leur conservation à 40°C/75%RH, à 2 mois (t2m), à 4 mois (t4m) et à 6 mois (t6m). Les résultats de ces mesures sont reportés dans le tableau 2.a ci-dessous, dans lequel la quantité de doxycycline base est exprimée en pourcentage par rapport au poids de prémélange étudié. Les rapports t2m/to, t4m/to et t6m/to expriment la proportion de doxycycline présente sous forme hyclate à 2, 4 et 6 mois, par rapport à la doxycycline présente dans les prémélanges à to. 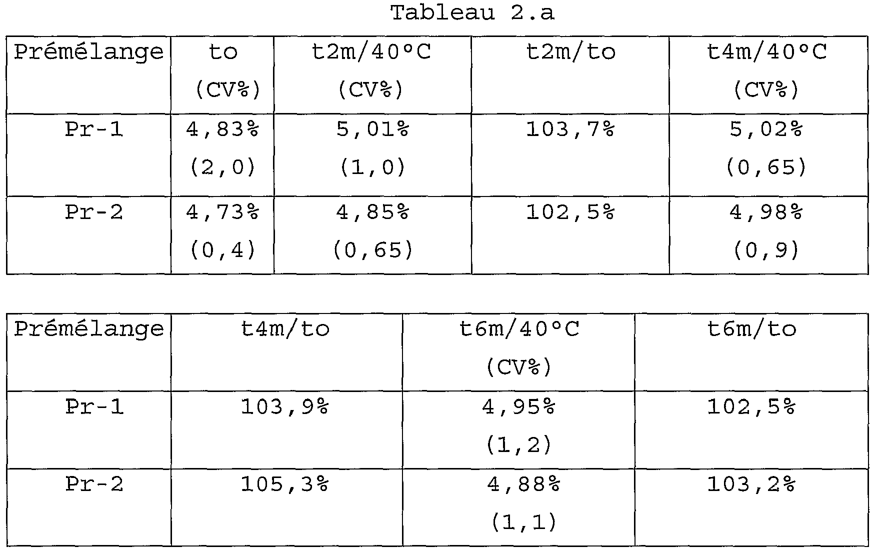
   Ces résultats montrent que les prémélanges Pr-1 et Pr-2 présentent une bonne stabilité à 2, 4 et 6 mois à 40°C/75%RH.
2.b) Un prémélange, référencé Pr-3, obtenu par mélange du grain Gr-3, décrit dans l'exemple 1.b, avec du gluten de mais, a été suivi en stabilité. La quantité d'amoxicilline engagée sous forme trihydrate a été mesurée pour ce prémélange dès sa formation, à to, puis au cours de sa conservation à 30°C/60%RH, à 2 mois (t2m), à 4 mois (t4m) et à 6 mois (t6m). Les résultats de ces mesures sont reportés dans le tableau 2.b ci-dessous, dans lequel la quantité d'amoxicilline base est exprimée en pourcentage par rapport au poids de prémélange étudié. Les rapports t2m/to, t4m/to et t6m/to expriment la proportion d'amoxicilline présente sous forme trihydrate à 2, 4 et 6 mois, par rapport à l'amoxicilline présente dans le prémélange à to.

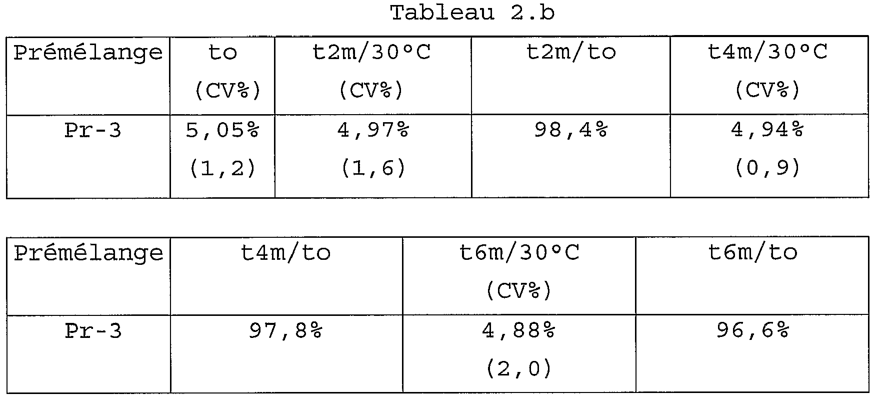

Ces résultats montrent que le prémélange Pr-3 présente une bonne stabilité à 2, 4 et 6 mois à 30°C/60%RH.

### EXEMPLE 3 : Respect de la biodisponibilité

Les caractéristiques des produits ne contrarient pas l'activité *in vivo* de(s) principe actif(s) correspondant(s) visualisée par la disponibilité *in vitro*. Une étude de dissolution *in vitro* a été réalisée pour les deux grains doxycycline/Carbopol 974P NF et amoxicilline/Carbopol 974P NF. On a comparé, pour chacun, la dissolution du principe actif seul et sa dissolution à partir des grains Gr-1 et Gr-2 pour la doxycycline, et du grain Gr-3 pour l'amoxicilline, décrits dans l'exemple 1.

Il n'y a pas de différence significative de dissolution de l'amoxicilline, entre le principe actif amoxicilline trihydrate, et le grain amoxicilline/Carbopol 974P NF. De même pour la doxycycline hyclate, qui est beaucoup plus soluble que l'amoxicilline trihydrate. Le principe actif, doxycycline hyclate, passe très rapidement en solution, incorporé dans des grains tels que les grains Gr-1 et Gr-2, la solubilisation est régulière.

### EXEMPLE 4 : Préparation de granulés selon le procédé de l'invention.

4.a) Des granulés supplémentés à 600 ppm en amoxicilline sont préparés à l'aide d'un mélangeur Stolz-Forberg^{™}, de type F6 RVC, comportant une buse de pulvérisation n°400050.
   - on transfère, dans la cuve du mélangeur, 4 kg de granulés porcelet démarrage de 4,2 mm de diamètre, et 50,6 g d'un prémélange Pr-4, dosé à 4,80% en amoxicilline base, sur un support de farine de blé ;
   - on introduit, dans une réserve pressurisable à l'air comprimé, 200 g d'eau, qui constitue la phase aqueuse, et qui représente environ 5% en poids par rapport à l'ensemble granulés/prémélange ;
   - on actionne le mélangeur pour une agitation des granulés et du prémélange pendant 15 s ;
   - on pulvérise la phase aqueuse au moyen de la buse du mélangeur, en réglant la pression d'air comprimé à 1,8 bar. Cette phase aqueuse est pulvérisée dans la zone axiale supérieure de la cuve du mélangeur. La phase de pulvérisation dure effectivement 1 min et 15 s ;
   - on poursuit l'agitation au-delà de la fin de la pulvérisation, pendant 15 s, puis on stoppe la rotation des rotors et on vidange la cuve par retournement à 180° ;
   - on effectue enfin un séchage limité ou contrôlé en cours de transfert avant conditionnement en vue de réduire le taux d'humidité des granulés supplémentés à 11 à 14%.
4.b) Des granulés supplémentés à 600 ppm en doxycycline sont préparés à l'aide du même mélangeur et selon sensiblement les mêmes conditions opératoires, avec plus précisément les modifications suivantes :
   - pour la 1ère étape, engagement de 47,1 g d'un prémélange Pr-5, dosé à 5,11% en doxycycline base, sur support farine de blé ;
   - pour la 2ème étape, engagement de 215 g d'une solution aqueuse comprenant 6% en poids de polyvinylpyrrolidone PVPK30 et 1% de sorbate de potassium, ce qui équivaut à 200 g d'eau ;
   - pour la 4ème étape, utilisation d'une pression d'air de 1,9 bar, pour une phase de pulvérisation qui dure effectivement 1 min et 20s.

### EXEMPLE 5 : Stabilité du principe actif dans les granulés supplémentés :

Des granulés supplémentés avec une teneur en principe actif voisine de 600 ppm ont été préparés, selon le procédé de l'invention décrit dans l'exemple précédent, avec les principes actifs suivants : amoxicilline trihydrate, doxycycline hyclate et tiamuline fumarate, incorporés dans des grains référencés respectivement Gr-4, Gr-5 et Gr-6 et obtenus via une granulation en présence d'alcool isopropylique. La composition quantitative de chacun des grains est respectivement :
- 85% d'amoxicilline trihydrate et 15% de Carbopol 974P NF pour Gr-4,
- 85% de doxycycline hyclate et 15% de Carbopol 974P NF pour Gr-5, et
- 85% de tiamuline fumarate, 10.5% de Carbopol 974P NF et 4.5% d'alginate de sodium pour Gr-6.

Chacun des grains est engagé dans un prémélange présentant une teneur voisine de 5% en principe actif, référencés Pr-4 (pour Gr-4), Pr-5 (pour Gr-5) et Pr-6 (pour Gr-6). Chacun des lots de granulés supplémentés a été scindé en deux sous lots correspondants à deux stades de séchage. Ces sous lots sont respectivement référencés :
- AlExt-4.0 avec 10,7% d'humidité et AlExt-4.1 avec 14,0% d'humidité (pour Pr-4),
- AlExt-5.0 avec 10,8% d'humidité et AlExt-5.1 avec 13,8% d'humidité (pour Pr-5), et
- AlExt-6.0 avec 10,8% d'humidité et AlExt-6.1 avec 13,9% d'humidité (pour Pr-6).

Les sous lots de granulés supplémentés sont conservés dans des conditions de température et d'humidité normale, soit 22 à 25°C et 70%, dans des sacs papier (emballage classique de vente). Les granulés ont été analysés périodiquement et les résultats sont reportés dans le tableau 3.

**Tableau 3**

| Lots | % humidité | to (ppm) | t21j (ppm) | t2m (ppm) | t3m (ppm) |
|---|---|---|---|---|---|
| AlExt-4.0 | 10,7 | 571 | 575 | 562 | 550 |
| AlExt-4.1 | 14,0 | 546 | 531 | 534 | 515 |
| AlExt-5.0 | 10,8 | 607 | 592 | 595 | 580 |
| AlExt-5.1 | 13,8 | 588 | 570 | 565 | 558 |
| AlExt-6.0 | 10,8 | 574 | 565 | 568 | 557 |
| AlExt-6.1 | 13,9 | 555 | 558 | 545 | 532 |

Les résultats mettent en évidence la stabilité des principes actifs dans les granulés supplémentés manufacturés selon le procédé de l'invention. On note le peu d'incidence du taux d'humidité résiduelle sur la stabilité.

Ces résultats montrent néanmoins une meilleure conservation des granulés supplémentés lorsque ceux-ci contiennent 11% d'humidité.

### EXEMPLE 6 : Durabilité des granulés supplémentés obtenus selon le procédé de l'invention

La cohésion des granulés supplémentés, et l'aptitude des grains du produit selon l'invention, plus précisément ici un grain associant amoxicilline/Carbopol 974P NF, à rester lié au granulé ont été appréciées. On a retenu pour cela l'emploi d'un matériel homologué, l'Eurotest, équipé d'un tamis de diamètre de maille 3,2 mm. L'appareil est constitué d'un corps en tôle d'acier pourvu de clapets d'entrée et de sortie, la sollicitation du produit se faisant par le mouvement d'un rotor carré fixé librement en bout d'arbre, pendant 20 s par essai.

Les essais ont été menés sur 6 lots représentatifs de granulés supplémentés (essais triplés), sur 500 g par essai, afin d'évaluer l'incidence sur la cohésion, de la proportion d'eau pulvérisée, de la présence ou non de PVPK30 dans la phase aqueuse pulvérisée, de la granulométrie du grain amoxicilline/Carbopol 974P NF, de la nature du support du prémélange, et de l'humidité résiduelle des granulés supplémentés, voisine de 10,5% pour la première série, de 14% pour la deuxième série.

On note, pour la première série et des granulés supplémentés à 900 ppm environ, l'extrême cohérence des résultats, avec des durabilités (taux de recouvrement en poids après tamisage) comprises entre 91,1 et 91,5%. 4 lots (AlExt-7 à 10) représentatifs pour couvrir les paramètres préférés cités dans le paragraphe précédent ont fait l'objet d'un dosage du principe actif, sur échantillon avant et après traitement, pour apprécier la relation entre durabilité et chute du titre en principe actif. On a rapporté dans le tableau 4, pour les 4 lots concernés, la durabilité (Dura.%), le CV% entre les essais pour la durabilité, le titre en principe actif avant [T(AV)] et après [T(AP)] l'essai Eurotest après mélange des trois échantillons par lot, le recouvrement du titre en principe actif après par rapport à avant [T(AP)/T(AV)] l'essai Eurotest.

**Tableau 4**

| Lots | Dura.(%) | CV(%) | T(AV) | T(AP) | T(AP)/T(AV) |
|---|---|---|---|---|---|
| AlExt-7 | 91,4% | 0,1 | 0,0806 | 0,0691 | 85,75% |
| AlExt-8 | 91,3% | 0,1 | 0,0843 | 0,0705 | 83,65% |
| AlExt-9 | 91,5% | 0,2 | 0,0873 | 0,0739 | 84,65% |
| AlExt-10 | 91,1% | 0,1 | 0,0879 | 0,0772 | 87,85% |

Les résultats des dosages montrent la même cohérence que celle notée pour la durabilité, avec une moyenne de 85,5% pour le recouvrement du titre en principe actif après (AP) par rapport à avant (AV) l'essai Eurotest, contre une moyenne de 91,3% pour la durabilité.

Sachant que le grain est exclusivement présent en surface du granulé supplémenté, il est évident que l'abrasion ne s'opère pas sélectivement à ce niveau, ce qui représente un avantage du procédé selon l'invention. La chute du titre en principe actif au niveau des granulés supplémentés suit de près au niveau proportion relative la perte de poids des dits granulés.

La même étude a été réalisée avec deux lots (AlExt-11 et 12) présentant une humidité résiduelle proche de 14%. Les résultats consignés dans le tableau 5 sont homogènes avec les résultats précédents. Le taux d'humidité résiduel n'a pas d'incidence sur la durabilité des granulés correspondants.

**Tableau 5**

| Lots | Dura.(%) | CV(%) | T(AV) | T(AP) | T(AP)/T(AV) |
|---|---|---|---|---|---|
| AlExt-11 | 92,5% | 0,1 | 0,0822 | 0,0717 | 87,25% |
| AlExt-12 | 92,3% | 0,1 | 0,0832 | 0,0727 | 87,40% |

### EXEMPLE 7 : Fabrication des granulés supplémentés selon un procédé de pré-granulation et stabilité de l'actif dans les granulés correspondants

### A) Fabrication de granulés supplémentés :

Les granulés supplémentés à environ 400 ppm ont été réalisés sur une presse de laboratoire à filière plate (Presse Kahl. 14-175), avec des canaux de 4 mm de diamètre et de 16 mm d'épaisseur, pour un taux de compression de 4, avec un aliment farine porcelet deuxième âge engageant d'une part, l'amoxicilline trihydrate, intégrée dans un prémélange sur farine de blé sous la forme d'un grain amoxicilline/Carbopol 974P NF selon l'invention, et d'autre part le même principe actif sous la forme du prémélange commercial Suramox^{™} 50. Chaque lot de granulés supplémentés a été recueilli sur un sécheur refroidisseur, en sortie de filière, pour un temps de séchage moyen de 5 min pour une charge de 5 kg de granulés.

Les mélanges de 50 kg d'aliment farine porcelet deuxième âge et soit de prémélange selon l'invention, soit de prémélange commercial Suramox^{™} 50, référencés respectivement AlInt-1.F et AlInt-2.F, sont réalisés à l'aide d'un mélangeur à pales à axe horizontal tournant à 60 tours/min.

Les consignes de réglages sont :
- débit de la préparation: 30 kg/h ;
- température de traitement dans le conditionneur : 55°C pour une première série et 85°C pour une deuxième série ;
- pression de vapeur : 1,6 bar ;
- réglage de hauteur de coupe des couteaux : 10 mm.

Chaque lot de granulés issus de chacun des 2 lots de mélange en tenant compte de la température de traitement 55°C et 85°C est référencé AlInt-1.G55 et AlInt-1.G85 pour le mélange AlInt-1.F et AlInt-2.G55 et AlInt-2.G85 pour le mélange AlInt-2.F.

A l'entrée du conditionneur, l'humidité est de 12,0%, la température de 15,5°C pour le traitement à 55°C, et de 15,7°C pour le traitement à 85°C.

A la sortie du conditionneur, l'humidité est de 14,7% pour le traitement à 55°C, et de 16,8% pour le traitement à 85°C, et la température est de 55,3°C pour le traitement à 55°C, et de 85,3°C pour le traitement à 85°C.

En sortie de presse, la température de la filière est de 74,2°C pour le traitement à 55°C, et de 82,8°C pour le traitement à 85°C, avec un écart de température entre l'entrée et la sortie de filière de 18,9°C pour le traitement à 55°C, et de -2,5°C pour le traitement à 85°C ; le temps de séjour du mélange dans la filière est de 6,8 s pour le traitement à 55°C, et de 6,4 s pour le traitement à 85°C ; le débit de la presse est de 31,9 kg/h pour le traitement à 55°C et de 32,6 kg/h pour le traitement à 85°C.

A la sortie du sécheur refroidisseur, tous les échantillons sont à température ambiante, avec une humidité de 13,1% pour le traitement à 55°C, et de 14,5% pour le traitement à 85°C.

### B) Stabilité du principe actif :

Pour les 2 lots d'aliment farine supplémentés, ainsi que les 4 lots de granulés correspondants, la teneur en principe actif a été déterminée à to, et à 1,5 mois (t1,5m) de conservation selon un conditionnement standard, d'une part à 25°C et 60% d'humidité, d'autre part à 30°C et 60% d'humidité (tableaux 6 et 7).

Les dosages du principe actif sont exprimés en ppm (to et t1,5m) par rapport au poids des mélanges ou granulés supplémentés. %/F exprime le rapport entre la proportion de principe actif dans les granulés supplémentés, soit après granulation à 55°C, soit après granulation à 85°C, et la proportion de principe actif dans le mélange correspondant.

**Tableau 6**

| Lots | to (ppm) | %/F | t1,5m (25°C) | t1,5m/to (25°C) |
|---|---|---|---|---|
| AlInt-1.F | 422,2 | | 409,7 | 97,0% |
| AlInt-1.G55 | 414,4 | 98,2 | 419,4 | 101,2% |
| AlInt-1.G85 | 408,7 | 96,8 | 409,2 | 100,1% |
| AlInt-2.F | 425,5 | | 401,5 | 94,4% |
| AlInt-2.G55 | 422,6 | 99,3 | 410,3 | 97,1% |
| AlInt-2.G85 | 405,2 | 95,2 | 408,7 | 100,9% |

**Tableau 7**

| Lots | to (ppm) | %/F | t1,5m (30°C) | t1,5m/to (30°C) |
|---|---|---|---|---|
| AlInt-1.F | 422,2 | | | |
| AlInt-1.G55 | 414,4 | 98,2 | 403,7 | 97,4% |
| AlInt-1.G85 | 408,7 | 96,8 | 389,7 | 95,2% |
| AlInt-2.F | 425,5 | | | |
| AlInt-2.G55 | 422,6 | 99,3 | 386,4 | 91,4% |
| AlInt-2.G85 | 405,2 | 95,2 | 393,8 | 97,2% |

Compte tenu de la nature des produits, principalement des granulés, des grains composant les prémélanges, de la faible teneur en principe actif (400 ppm), de la prise d'essai (20 g), du broyage des granulés et de la température résultante de ce dernier, des analyses pas faites au même instant, les résultats obtenus montrent une grande variabilité qu'il est nécessaire d'interpréter dans leur tendance et ensemble.

La comparaison des résultats montre :
- que l'étape de granulation, en particulier à 55°C, a peu d'impact sur la conservation à 25°C. Le même taux de recouvrement est retrouvé pour la forme mélange « F » que pour la forme granulé « G55 », pour chacun des deux lots de prémélange ;
- que la température de granulation (55°C ou 85°C) a peu d'impact sur la conservation à 30°C des granulés supplémentés. Les granulés supplémentés présentent des taux de recouvrement quasi identiques à t1,5m par rapport au to quelle que soit la température de granulation ;
- peu de différence dans le comportement des granulés supplémentés issus de chacun des 2 prémélanges, lorsqu'ils sont conservés à 30°C pendant t1,5m.

Les résultats montrent l'intérêt particulier de l'engagement d'un grain conforme à l'invention.

## Revendications

1. Prémélange pour la préparation d'aliments supplémentés pour animaux, ledit prémélange comportant, d'une part, une base végétale et/ou minérale et, d'autre part, des grains, lesdits grains comprenant au moins un principe actif et une composition comprenant un excipient ou un mélange d'excipients présentant des propriétés adhésives en présence d'une phase aqueuse, **caractérisé en ce que** les grains sont des grains d'un diamètre moyen compris entre 50 et 700 µm obtenus par granulation, qui comprennent entre 70 et 90 % en poids de principe actif et entre 10 et 30% en poids de composition.

2. Prémélange selon la revendication 1, **caractérisé en ce que** les grains consistent en un ou plusieurs principes actifs et un excipient ou un mélange d'excipients présentant des propriétés adhésives en présence d'une phase aqueuse.

3. Prémélange selon l'une des revendications 1 et 2, **caractérisé en ce que** l'excipient ou le mélange d'excipients satisfait au test d'adhésivité suivant selon lequel :
- on prépare 40 mg de grains d'un diamètre compris entre 200 et 500 µm, consistant en 70 à 90% en poids d'un agent de charge tel que la cellulose cristalline de type Avicel PH101 et 10 à 30% en poids d'une composition contenant uniquement l'excipient ou le mélange d'excipients ;
- on étale les grains sur toute la surface d'une plaque de verre d'environ 200 cm² ;
- on pulvérise environ 2 ml d'eau sur cette plaque de verre ;
- 2 minutes après la pulvérisation d'eau, on place la plaque de verre à la verticale à 25°C pendant 1 heure et on récupère les grains qui ne sont pas restés collés sur la plaque de verre ;
- on récupère moins de 40% du poids des grains.

4. Prémélange selon l'une des revendications 1 à 3, **caractérisé en ce qu'**il comprend 5 à 80% en poids de grains et 20 à 95% en poids de base végétale et/ou minérale.

5. Prémélange selon l'une des revendications 1 à 4, **caractérisé en ce que** les grains ont un diamètre moyen compris entre 50 et 500 µm et, plus préférentiellement, entre 50 et 200 µm.

6. Prémélange selon l'une des revendications 1 à 5, **caractérisé en ce que** le principe actif est choisi parmi les vitamines, les minéraux, les oligo-éléments, les acides aminés, les protéines, les enzymes, les micro-organismes revivifiables, les facteurs de croissance, les inhibiteurs de croissance des insectes, les anti-bactériens, les antifongiques, les antiseptiques, les antibiotiques, les antibiomimétiques, les antiparasitaires et/ou les anti-infectieux de synthèse.

7. Prémélange selon l'une des revendications 1 à 6, **caractérisé en ce que** l'excipient est choisi parmi les carbomers, le chitosan et ses dérivés, l'alginate de sodium et la gomme xanthane.

8. Grains de diamètre moyen compris entre 50 et 700 µm, obtenus par granulation, pour la préparation d'aliments supplémentés pour animaux, lesdits grains comprenant au moins un principe actif et un excipient ou un mélange d'excipients présentant des propriétés adhésives en présence d'une phase aqueuse, **caractérisés en ce que** lesdits grains comprennent entre 70 et 90 % en poids de principe actif et entre 10 et 30 % en poids d'excipient ou de mélange d'excipients présentant des propriétés adhésives en présence d'une phase aqueuse et satisfaisant au test d'adhésivité suivant selon lequel :
- on prépare 40 mg de grains, d'un diamètre compris entre 200 et 500 µm, consistant en 70 à 90% en poids d'un agent de charge tel que la cellulose cristalline de type Avicel® PH101 et 10 à 30% en poids d'une composition contenant uniquement l'excipient ou le mélange d'excipients ;
- on étale les grains sur toute la surface d'une plaque de verre d'environ 200 cm² ;
- on pulvérise environ 2 ml d'eau sur cette plaque de verre ;
- 2 minutes après la pulvérisation d'eau, on place la plaque de verre à la verticale à 25°C pendant 1 heure et on récupère les grains qui ne sont pas restés collés sur la plaque de verre ;
- on récupère moins de 40% du poids initial des grains.

9. Grains selon la revendication 8, **caractérisés en ce qu'**ils consistent en un ou plusieurs principes actifs et un excipient ou un mélange d'excipients présentant des propriétés adhésives en présence d'une phase aqueuse.

10. Grains selon l'une des revendications 8 ou 9, **caractérisés en ce qu'**ils ont un diamètre moyen compris entre 50 et 500 µm et, plus préférentiellement, entre 50 et 200 µm.

11. Grains selon l'une des revendications 8 à 10, **caractérisés en ce que** le principe actif est choisi parmi les vitamines, les minéraux, les oligo-éléments, les acides aminés, les protéines, les enzymes, les micro-organismes revivifiables, les facteurs de croissance, les inhibiteurs de croissance des insectes, les anti-bactériens, les antifongiques, les antiseptiques, les antibiotiques, les antibiomimétiques, les antiparasitaires et/ou les anti-infectieux de synthèse.

12. Grains selon l'une des revendications 8 à 11, **caractérisés en ce que** l'excipient est choisi parmi les carbomers, le chitosan et ses dérivés, l'alginate de sodium et la gomme xanthane.

13. Procédé de préparation d'aliments supplémentés pour animaux, **caractérisé en ce qu'**il comprend des étapes de :
- mélange des grains selon la revendication 8 avec une base végétale et/ou minérale en vue de l'obtention d'un prémélange selon la revendication 1;
- mélange dudit prémélange avec un support alimentaire en vue de l'obtention de l'aliment supplémenté ; et de
- pulvérisation de la phase aqueuse sur ledit support alimentaire avant mélange et/ou sur l'ensemble prémélange/support alimentaire en cours de mélange, de manière à obtenir un aliment supplémenté présentant un taux d'humidité inférieur à 20%.

14. Procédé selon la revendication 13, **caractérisé en ce que** le poids de la phase aqueuse pulvérisée sur le support alimentaire avant mélange et/ou sur l'ensemble prémélange/support alimentaire en cours de mélange représente 4 à 9% du poids de l'ensemble prémélange/support alimentaire.

15. Procédé selon l'une des revendications 13 ou 14, **caractérisé en ce que** le support alimentaire est une ration alimentaire et **en ce que** le prémélange est saupoudré directement sur ladite ration alimentaire.

16. Utilisation du prémélange selon l'une quelconque des revendications 1 à 7 pour la préparation d'aliments supplémentés pour l'alimentation des animaux sous forme de granulés consistant à introduire le prémélange dans un mélangeur avant granulation.

17. Aliment supplémenté pour animaux comprenant un support alimentaire et 0,01 à 5% en poids d'un prémélange selon l'une des revendications 1 à 7.

## Patentansprüche

1. Vormischung zur Herstellung von angereicherten Futtermitteln für Tiere, wobei die Vormischung einerseits eine pflanzliche und/oder mineralische Basis und andererseits Körner umfasst, wobei die Körner mindestens einen Wirkstoff und eine Zusammensetzung umfassen, umfassend einen Trägerstoff oder eine Mischung aus Trägerstoffen, die haftende Eigenschaften in Anwesenheit einer wässrigen Phase aufweisen, **dadurch gekennzeichnet, dass** die Körner Körner mit einem mittleren Durchmesser im Bereich zwischen 50 und 700 µm sind, erhalten durch Granulierung, die zwischen 70 und 90 Gew% Wirkstoff und zwischen 10 und 30 Gew% Zusammensetzung umfassen.

2. Vormischung nach Anspruch 1, **dadurch gekennzeichnet, dass** die Körner aus einem oder aus mehreren Wirkstoffen und einem Trägerstoff oder einer Mischung aus Trägerstoffen bestehen, die haftende Eigenschaften in Anwesenheit einer wässrigen Phase aufweisen.

3. Vormischung nach einem der Ansprüche 1 und 2, **dadurch gekennzeichnet, dass** der Trägerstoff oder die Mischung aus Trägerstoffen dem folgenden Haftungstest genügt, gemäß dem:
- 40 mg Körner mit einem Durchmesser im Bereich zwischen 200 und 500 µm hergestellt werden, bestehend aus 70 bis 90 Gew% eines Füllmittels, wie z.B. kristalliner Zellulose vom Typ Avicel PH101 und 10 bis 30 Gew% einer Zusammensetzung, die ausschließlich den Trägerstoff oder die Mischung aus Trägerstoffen enthält;
- die Körner auf der gesamten Fläche einer Glastafel von ungefähr 200 cm² ausgebreitet werden;
- ungefähr 2 ml Wasser auf dieser Glastafel zerstäubt werden;
- 2 Minuten nach der Zerstäubung von Wasser die Glastafel bei 25 °C während 1 Stunde in die Vertikale gebracht wird und die Körner wiedergewonnen werden, die nicht auf der Glastafel kleben blieben;
- weniger als 40 Gew% der Körner wiedergewonnen werden.

4. Vormischung nach einem der Ansprüche 1 bis 3, **dadurch gekennzeichnet, dass** sie 5 bis 80 Gew% Körner und 20 bis 95 Gew% pflanzliche und/oder mineralische Basis umfasst.

5. Vormischung nach einem der Ansprüche 1 bis 4, **dadurch gekennzeichnet, dass** die Körner einen mittleren Durchmesser im Bereich zwischen 50 und 500 µm und bevorzugt zwischen 50 und 200 µm aufweisen.

6. Vormischung nach einem der Ansprüche 1 bis 5, **dadurch gekennzeichnet, dass** der Wirkstoff ausgewählt ist aus den Vitaminen, den Mineralien, den Oligoelementen, den Aminosäuren, den Proteinen, den Enzymen, den regenerierbaren Mikroorganismen, den Wachstumsfaktoren, den Wachstumshemmern von Insekten, den antibakteriellen Mitteln, den Fungiziden, den antiseptischen Mitteln, den Antibiotika, den antibiomimetischen Mitteln, den Schädlingsbekämpfungsmitteln und/oder den synthetischen infektionshemmenden Mitteln.

7. Vormischung nach einem der Ansprüche 1 bis 6, **dadurch gekennzeichnet, dass** der Trägerstoff ausgewählt ist aus den Carbomeren, dem Chitosan und seinen Derivaten, dem Natriumalginat und dem Xanthangummi.

8. Körner mit einem mittleren Durchmesser im Bereich zwischen 50 und 700 µm, erhalten durch Granulierung, zur Herstellung von angereicherten Futtermitteln für Tiere, wobei die Körner mindestens einen Wirkstoff und einen Trägerstoff oder eine Mischung aus Trägerstoffen umfassen, die haftende Eigenschaften in Anwesenheit einer wässrigen Phase aufweisen, **dadurch gekennzeichnet, dass** die Körner zwischen 70 und 90 Gew% Wirkstoff und zwischen 10 und 30 Gew% Trägerstoff oder Mischung aus Trägerstoffen umfassen, die haftende Eigenschaften in Anwesenheit einer wässrigen Phase aufweisen, und dem folgenden Haftungstest genügen, gemäß dem:
- 40 mg Körner mit einem Durchmesser im Bereich zwischen 200 und 500 µm hergestellt werden, bestehend aus 70 bis 90 Gew% eines Füllmittels, wie z.B. kristalliner Zellulose vom Typ Avicel PH101 und 10 bis 30 Gew% einer Zusammensetzung, die ausschließlich den Trägerstoff oder die Mischung aus Trägerstoffen enthält;
- die Körner auf der gesamten Fläche einer Glastafel von ungefähr 200 cm² ausgebreitet werden;
- ungefähr 2 ml Wasser auf dieser Glastafel zerstäubt werden;
- 2 Minuten nach der Zerstäubung von Wasser die Glastafel bei 25 °C während 1 Stunde in die Vertikale gebracht wird und die Körner wiedergewonnen werden, die nicht auf der Glastafel kleben blieben;
- weniger als 40 Gew% der Körner wiedergewonnen werden.

9. Körner nach Anspruch 8, **dadurch gekennzeichnet, dass** sie aus einem oder aus mehreren Wirkstoffen und einem Trägerstoff oder einer Mischung aus Trägerstoffen bestehen, die haftende Eigenschaften in Anwesenheit einer wässrigen Phase aufweisen.

10. Körner nach einem der Ansprüche 8 oder 9, **dadurch gekennzeichnet, dass** sie einen mittleren Durchmesser im Bereich zwischen 50 und 500 µm und bevorzugt zwischen 50 und 200 µm aufweisen.

11. Körner nach einem der Ansprüche 8 bis 10, **dadurch gekennzeichnet, dass** der Wirkstoff ausgewählt ist aus den Vitaminen, den Mineralien, den Oligoelementen, den Aminosäuren, den Proteinen, den Enzymen, den regenerierbaren Mikroorganismen, den Wachstumsfaktoren, den Wachstumshemmern von Insekten, den antibakteriellen Mitteln, den Fungiziden, den antiseptischen Mitteln, den Antibiotika, den antibiomimetischen Mitteln, den Schädlingsbekämpfungsmitteln und/oder den synthetischen infektionshemmenden Mitteln.

12. Körner nach einem der Ansprüche 8 bis 11, **dadurch gekennzeichnet, dass** der Trägerstoff ausgewählt ist aus den Carbomeren, dem Chitosan und seinen Derivaten, dem Natriumalginat und dem Xanthangummi.

13. Verfahren zur Herstellung von angereicherten Futtermitteln für Tiere, **dadurch gekennzeichnet, dass** es die folgenden Schritte umfasst:
- Mischen der Körner nach Anspruch 8 mit einer pflanzlichen und/oder mineralischen Basis zum Erhalt einer Vormischung nach Anspruch 1;
- Mischen der Vormischung mit einem Futtermittelträger zum Erhalt eines angereicherten Futtermittels; und
- Zerstäubung der wässrigen Phase auf dem Futtermittelträger vor dem Mischen und/oder auf der/dem gesamten Vormischung/Futtermittelträger im Laufe der Mischung, um ein angereichertes Futtermittel zu erhalten, das eine Feuchtigkeitsrate von weniger als 20 % aufweist.

14. Verfahren nach Anspruch 13, **dadurch gekennzeichnet, dass** das Gewicht der wässrigen Phase, zerstäubt auf dem Futtermittelträger vor der Mischung und/oder auf der/dem gesamten Vormischung/Futtermittelträger im Laufe der Mischung 4 bis 9 Gew% der/des gesamten Vormischung/Futtermittelträgers darstellt.

15. Verfahren nach einem der Ansprüche 13 oder 14, **dadurch gekennzeichnet, dass** der Futtermittelträger eine Futtermittelration ist, und dadurch, dass die Vormischung direkt auf die Futtermittelration gestreut wird.

16. Verwendung der Vormischung nach einem der Ansprüche 1 bis 7 zur Herstellung von angereicherten Futtermitteln für Tiere in Form von Granulat, die darin besteht, die Vormischung vor der Granulierung in einen Mischer einzuführen.

17. Angereichertes Futtermittel für Tiere, umfassend einen Futtermittelträger von 0,01 bis 5 Gew% einer Vormischung nach einem der Ansprüche 1 bis 7.

## Claims

1. Premix for the preparation of supplemented animal feed, said premix comprising, on one hand, a plant and/or mineral base and, on the other, grains, said grains comprising at least one active ingredient and a composition comprising an excipient or a mixture of excipients exhibiting adhesive properties in the presence of an aqueous phase, **characterised in that** the grains are grains having a mean diameter between 50 and 700 µm obtained by granulation, which comprise between 70 and 90% by weight of active ingredient and between 10 and 30% by weight of composition.

2. Premix according to claim 1, **characterised in that** the grains consist of one or a plurality of active ingredients and an excipient or a mixture of excipients exhibiting adhesive properties in the presence of an aqueous phase.

3. Premix according to any one of claims 1 and 2, **characterised in that** the excipient or mixture of excipients passes the adhesion test whereby:
- 40 mg of grains of a diameter between 200 and 500 µm are prepared, consisting of 70 to 90% by weight of a bulking agent such as Avicel PH101 type crystalline cellulose and 10 to 30% by weight of a composition containing only the excipient or mixture of excipients;
- the grains are spread over the entire surface of a glass plate of approximately 200 cm²;
- approximately 2 ml of water is sprayed onto this glass plate;
- 2 minutes after spraying water, the glass plate is placed upright at 25°C for 1 hour and the grains which have not remained adhered to the glass plate are retrieved;
- less than 40% of the weight of the grains is retrieved.

4. Premix according to any one of claims 1 to 3, **characterised in that** it comprises 5 to 80% by weight of grains and 20 to 95% by weight of plant and/or mineral base.

5. Premix according to any one of claims 1 to 4, **characterised in that** the grains have a mean diameter between 50 and 500 µm and, more preferentially, between 50 and 200 µm.

6. Premix according to any one of claims 1 to 5, **characterised in that** the active ingredient is chosen from vitamins, minerals, trace elements, amino acids, proteins, enzymes, viable micro-organisms, growth factors, insect growth inhibitors, antibacterials, antifungals, antiseptics, antibiotics, antibiomimetics, antiparasitics and/or anti-infectious agents from synthetic sources.

7. Premix according to any one of claims 1 to 6, **characterised in that** the excipient is chosen from carbomers, chitosan and derivatives thereof, sodium alginate and xanthan gum.

8. Grains having a mean diameter between 50 and 700 µm, obtained by granulation, for the preparation of supplemented animal feed, said grains comprising at least one active ingredient and an excipient or a mixture of excipients exhibiting adhesive properties in the presence of an aqueous phase, **characterised in that** said grains comprise between 70 and 90% by weight of active ingredient and between 10 and 30% by weight of excipient or mixture of excipients exhibiting adhesive properties in the presence of an aqueous phase and passing the adhesion test whereby:
- 40 mg of grains of a diameter between 200 and 500 µm are prepared, consisting of 70 to 90% by weight of a bulking agent such as Avicel PH101 type crystalline cellulose and 10 to 30% by weight of a composition containing only the excipient or mixture of excipients;
- the grains are spread over the entire surface of a glass plate of approximately 200 cm²;
- approximately 2 ml of water is sprayed onto this glass plate;
- 2 minutes after spraying water, the glass plate is placed upright at 25°C for 1 hour and the grains which have not remained adhered to the glass plate are retrieved;
- less than 40% of the weight of the grains is retrieved.

9. Grains according to claim 8, **characterised in that** they consist of one or a plurality of active ingredients and an excipient or a mixture of excipients exhibiting adhesive properties in the presence of an aqueous phase.

10. Grains according to any one of claims 8 or 9, **characterised in that** they have a mean diameter between 50 and 500 µm and, more preferentially, between 50 and 200 µm.

11. Grains according to any one of claims 8 to 10, **characterised in that** the active ingredient is chosen from vitamins, minerals, trace elements, amino acids, proteins, enzymes, viable micro-organisms, growth factors, insect growth inhibitors, antibacterials, antifungals, antiseptics, antibiotics, antibiomimetics, antiparasitics and/or anti-infectious agents from synthetic sources.

12. Grains according to any one of claims 8 to 11, **characterised in that** the excipient is chosen from carbomers, chitosan and derivatives thereof, sodium alginate and xanthan gum.

13. Method for preparing supplemented animal feed, **characterised in that** it comprises steps for:
- mixing the grains according to claim 8 with a plant and/or mineral base with a view to obtaining a premix according to claim 1;
- mixing said premix with a feed substrate with a view to obtain the supplemented feed; and
- spraying said aqueous phase onto said feed substrate prior to mixing and/or onto the premix/feed substrate assembly during mixing, so as to obtain a supplemented feed having a moisture content less than 20%.

14. Method according to claim 13, **characterised in that** the weight of the aqueous phase sprayed onto the feed substrate prior to mixing and/or onto the premix/feed substrate assembly during mixing represents 4 to 9% of the weight of the premix/feed substrate assembly.

15. Method according to any one of claims 13 or 14, **characterised in that** the feed substrate is a feed ration and **in that** the premix is sprinkled directly onto said feed ration.

16. Use of the premix according to any one of claims 1 to 7 for the preparation of supplemented animal feeds in the form of granules consisting of introducing the premix into a mixer prior to granulation.

17. Supplemented animal feed comprising a feed substrate and 0.01 to 5% by weight of a premix according to any one of claims 1 to 7.
